(19) Europäisches Patentamt
European Patent Office
Office européen des brevets

(11) **EP 4 632 426 A1**

(12) **EUROPEAN PATENT APPLICATION**

(43) Date of publication:
**15.10.2025 Bulletin 2025/42**

(21) Application number: **25160716.4**

(22) Date of filing: **27.02.2025**

(51) International Patent Classification (IPC):
*G01S 7/41* (2006.01)    *G01S 13/66* (2006.01)
*G01S 13/72* (2006.01)    *G01S 13/931* (2020.01)
*G06V 10/764* (2022.01)    *G06V 10/82* (2022.01)
*G06V 20/58* (2022.01)

(52) Cooperative Patent Classification (CPC):
**G01S 13/931; G01S 7/417; G01S 13/66;
G01S 13/726; G06V 10/764; G06V 10/82;
G06V 20/58;** G01S 2013/93275

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2024 US 202418634244**

(71) Applicant: **NXP B.V.**
**5656 AG Eindhoven (NL)**

(72) Inventors:
• **CHEN, Lihui**
  **5656AG Eindhoven (NL)**
• **RAVINDRAN, Satish**
  **5656AG Eindhoven (NL)**
• **HASSAN, Syed Mujtaba**
  **5656AG Eindhoven (NL)**
• **WU, Ryan Haoyun**
  **5656AG Eindhoven (NL)**

(74) Representative: **Hardingham, Christopher Mark**
**NXP Semiconductors
Intellectual Property Group
The Cattle Barn
Upper Ashfield Farm, Hoe Lane
Romsey, Hampshire S051 9NJ (GB)**

(54) **EXTRACTING FEATURES FROM QUEUED RADAR FRAMES**

(57)    A computerized technique is disclosed of identifying object features in an environment of a vehicle. The technique includes receiving, by an encoder, data representing a plurality of frames, the frames providing point-in-time versions of a segmented pointed cloud derived from output of one or more radar sensors of the vehicle and including points that represent radar detections corresponding to an object in the environment at respective instants in time. The technique further includes arranging the plurality of frames in a time-ordered queue and processing the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

FIG. 2

EP 4 632 426 A1

**Description**

BACKGROUND

This disclosure is directed generally to vehicular radar (Radio Detection and Ranging), and more particularly to forming time-ordered queues of radar frames and extracting object features from the queues using temporal-spatial processing.

Radar systems have become common features in many vehicles, such as cars, trucks, and vans. A vehicle may be equipped with millimeter wave (mmWave) radar sensors, which may be positioned and oriented to detect objects in the environment. The sensors emit high-frequency electromagnetic signals and receive back detections, such as reflections and other signal content. Signal processing circuitry processes and digitizes the detections and compares them with emitted signals to generate a radar point cloud, i.e., a three-dimensional spatial map of the vehicle's environment.

Points in the radar point cloud represent radar detections and have certain attributes. Examples of these attributes include position (e.g., x-y-z coordinates), time, doppler (velocity toward or away from the sensors), and radar Cross Section (RCS, which indicates intensity of detections and is suggestive of the material of the reflector, such as metal, wood, or plastic).

SUMMARY

According to a first aspect of the present disclosure, there is provided a device comprising control circuitry that includes a set of processors coupled to memory, the control circuitry constructed and arranged to perform a method of identifying object features in an environment of a vehicle, the method including: receiving, by an encoder that runs on the control circuitry, data representing a plurality of frames, the frames of the plurality of frames providing point-in-time versions of a segmented pointed cloud derived from output of one or more radar sensors of the vehicle and including points that represent radar detections corresponding to an object in the environment at respective instants in time; arranging the plurality of frames in a time-ordered queue; and processing the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

In one or more embodiments, the method further includes providing the extracted features of the object to a classification head constructed and arranged to classify the object as one of a plurality of object types, the object types including one or more of (i) pedestrians, (ii) bicyclists, or (iii) motorcyclists.

In one or more embodiments, selecting the plurality of sample points includes performing a farthest point sampling (FPS), the FPS including searching for a next sample point of the plurality of sample points based on distances of other points of the plurality of frames from a current sample point of the plurality of sample points, wherein the distances are based on both spatial offsets and temporal offsets.

In one or more such embodiments, the method further includes determining the distances of the other points from the current sample point of the plurality of sample points based on the spatial offsets and the temporal offsets, wherein determining the distances includes weighting contributions of the spatial offsets and temporal offsets using at least one tunable parameter.

In one or more embodiments, performing the FPS includes limiting a temporal search range within which the next sample point is selected, such that points from at least one frame in the queue are excluded as candidates for the next sample point.

In one or more such embodiments, the method further includes detecting a speed of motion of the object relative to the vehicle and increasing the temporal search range responsive to the speed falling below a threshold speed.

In one or more embodiments, limiting the temporal search range further includes: (i) searching in a first direction only until a sample point is selected from a first end frame of the queue; (ii) then searching only in the first end frame for a single sample point; (iii) then searching in a second direction opposite the first direction until a sample point is selected from a second end frame of the queue opposite the first end frame; and (iv) then searching only in the second end frame for a single sample point.

In one or more embodiments, selecting the plurality of sample points includes selecting fewer than all of the points in the frames of the queue. In one or more embodiments, forming the plurality of groups includes providing a respective group for each of the plurality of sample points, and wherein at least one group includes points from multiple frames. In one or more embodiments, the method further comprises limiting frames from which points may be selected for a group to fewer than all frames in the queue.

In one or more embodiments, forming the plurality of groups further includes: limiting candidate points within a current frame that may be selected for inclusion in a particular group to points within a first spatial radius of a current sample point; and limiting candidate points within a time-adjacent frame that may be selected for inclusion in the particular group to points within a second spatial radius of the current sample point, wherein the first spatial radius is larger than the second spatial radius.

In one or more embodiments, selecting the plurality of sample points is performed by a sampling component, forming the plurality of groups is performed by a grouping component, and the method further includes: storing the points and associated attributes in an array in computer memory, the array having different indices for respective points, and identifying, by the sampling component, the plurality of sample points to the grouping component by providing array indices of the plurality of sample points but not by providing the associated attributes.

In one or more embodiments, extracting features of the object includes: constructing a tensor having a first dimension for different sample points of the plurality of sample points, a second dimension for points per group of the plurality of groups, and a third dimension for attributes of points within the groups; and providing the tensor as input to a neural network trained to identify object features from sample points, groups, and attributes.

In one or more embodiments, the method further includes adding frames to the queue until a total number of points in the frames of the queue meets a minimum limit.

In one or more embodiments, the method further includes removing at least one oldest frame from the queue responsive to a total number of points in the frames of the queue exceeding a maximum limit.

In one or more embodiments, the encoder is a hierarchical encoder that includes multiple encoder stages, the stages including: a first encoder stage constructed and arranged to extract features of the object on a first spatial scale; and a second encoder stage cascaded with the first encoder stage, the second encoder stage constructed and arranged to extract features of the object on a second spatial scale different from the first spatial scale and to receive features of the object extracted by the first encoder stage as inputs.

According to a further aspect of the present disclosure, there is provided a computer-implemented method of identifying object features in an environment of a vehicle, comprising: receiving data representing a plurality of frames derived from output of one or more radar sensors of the vehicle, the frames of the plurality of frames providing point-in-time versions of a segmented pointed cloud derived from output of one or more radar sensors of the vehicle and including points that represent radar detections corresponding to an object in the environment at respective instants in time; arranging the plurality of frames in a time-ordered queue; and processing the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

In one or more embodiments, processing the frames in the queue includes: extracting, by a first encoder stage, features of the object on a first spatial scale; providing the features of the object extracted by the first encoder stage as inputs to a second encoder stage cascaded with the first encoder stage; and operating the second encoder to extract features of the object on a second spatial scale different from the first spatial scale.

According to a further aspect of the present disclosure, there is provided a computer program product including a set of non-transitory, computer-readable media having instructions which, when executed by control circuitry of a computerized apparatus, cause the computerized apparatus to perform a method of identifying object features in an environment of a vehicle, the method comprising: receiving, by an encoder, a plurality of frames derived from output of one or more radar sensors of the vehicle, the frames of the plurality of frames providing point-in-time versions of a segmented pointed cloud derived from output of one or more radar sensors of the vehicle and including points that represent radar detections corresponding to an object in the environment at respective instants in time; arranging the plurality of frames in a time-ordered queue; and processing the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

In one or more embodiments, selecting the plurality of sample points includes performing a farthest point sampling (FPS), the FPS including searching for a next sample point of the plurality of sample points based on distances of other points of the plurality of frames from a current sample point of the plurality of sample points, wherein the distances are based on both spatial offsets and temporal offsets.

BRIEF DESCRIPTION OF THE SEVERAL VIEWS OF THE DRAWINGS

The foregoing and other features and advantages will be apparent from the following description of particular embodiments, as illustrated in the accompanying drawings, in which like reference characters refer to the same or similar parts throughout the different views. The drawings are not necessarily to scale, emphasis instead being placed upon illustrating the principles of various embodiments.

FIG. 1 is a block diagram of an example environment in which certain embodiments of the improved technique can be practiced.

FIG. 2 is a block diagram of an example hierarchical temporal-spatial encoder of FIG. 1 according to certain embodiments.

FIG. 3 is a diagram showing an example queue of radar frames that may be provided as input to the hierarchical temporal-spatial encoder of FIGS. 1 and 2 according to certain embodiments.

FIG. 4 is a diagram showing an example arrangement for temporal-spatial sampling of radar points according to certain embodiments.

FIG. 5 is a diagram showing an example arrangement for temporal-spatial grouping around sampled radar points according to certain embodiments.

FIG. 6 is a diagram showing an example approach to queuing that enforces a minimum point count according to certain embodiments.

FIG. 7 is a diagram showing an example approach to queuing that enforces a maximum point count according to certain embodiments.

FIG. 8 is a flowchart showing an example method of identifying object features in a physical environment of a vehicle according to certain embodiments.

FIG. 9 is a graph showing an example comparison of results between temporal-spatial processing according to certain embodiments and temporal-only processing.

DETAILED DESCRIPTION

Embodiments of the improved technique will now be described. One should appreciate that such embodiments are provided by way of example to illustrate certain features and principles but are not intended to be limiting.

Embodiments of this disclosure are directed to an improved technique of identifying objects and/or object features based on radar signals. The technique includes receiving frames depicting an object at consecutive instants in time and arranging the frames in a time-ordered queue. The technique further includes sampling radar points across multiple frames of the queue and grouping together points surrounding the sampled points. The technique then extracts object features based on the sampled points and groups. In some examples, such features are processed further to identify the particular type of object. Additionally, or alternatively, such features may be provided as input to other vehicle tasks, such as those used for advanced driver assistance and/or autonomous driving. Advantageously, leveraging radar points across multiple frames enables the construction of less sparse representations of objects, which promotes more accurate and reliable feature extraction and/or object identification. In some examples, the sampling, grouping, and extracting of features are implemented by an encoder. Sampling may be achieved using a modified form of farthest point sampling (FPS), which accounts not only for distances between points in space but also differences in time. Grouping may also be performed based on both space and time, with points being grouped together based not only on spatial proximity but also temporal proximity. In some examples, multiple encoders are cascaded to perform hierarchical feature extraction.

In some situations, it is desirable not only to detect that there is an object in the environment, but also the type of object, such as whether the object is a car, a truck, a motorcycle, a bicycle, or a pedestrian. To this end, a radar system may process a point cloud to identify separate objects, e.g., based on common doppler, RCS, and/or direction, and may construct virtual bounding boxes around the detected objects. The bounding boxes are then processed individually to identify object type.

Identifying types of objects within bounding boxes may proceed by analyzing radar frames on an individual basis, such as one frame at a time. A "frame" as used herein is a point-in-time snapshot of a radar point cloud or a portion thereof that is contained within a bounding box. Analyzing bounding boxes on an individual-frame basis allows a determination of spatial features of objects represented within individual frames. Such an approach is effective for large objects that have dense radar detections, such as cars and trucks.

The above approach has proven less effective, however, with small objects, such as pedestrians, bicyclists, and motorcyclists. With small objects, the number of radar detections contained within each frame may be in the single digits, and for some frames may be zero. Such sparsity of radar detections within frames can cause radar systems to misidentify small objects.

In addition, some use cases involving advanced driver assistance (ADAS) and autonomous driving (AD) do not necessarily require object identification but rather respond to features of objects, such as surfaces, edges, corners, or the like. However, feature detection using the above approach suffers from the same deficiencies as object identification when faced with sparse radar detections. What is needed, therefore, is a more robust approach for identifying both large and small objects as well as features of such objects. This need is addressed at least in part by the improved technique presented in this disclosure.

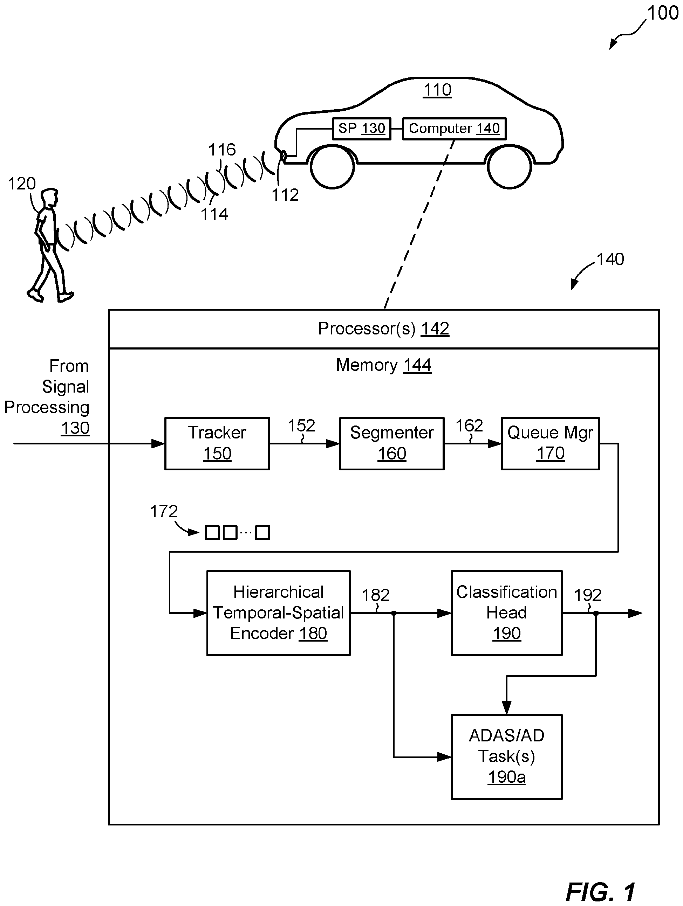

FIG. 1 shows an example environment 100 in which embodiments of the improved technique can be practiced. Here, a vehicle 110, such as a car, truck, van, or the like, may be driven within the environment 100. The vehicle 110 is equipped with a radar system capable of sensing objects 120 in the environment, such as pedestrians, other vehicles, bicyclists, motorcyclists, stationary objects, and the like. The radar system may include any number of radar sensors 112, as well as a signal processing circuitry 130 and a computer 140. In a common arrangement, a horizontal array of sensors 112 may be embedded in a front bumper or other forward-facing external surface of the vehicle 110. Additional sensors may be provided at the rear and/or sides of the vehicle 110 in some cases. Each radar sensor 112 is constructed and arranged to emit radiofrequency (RF) signals 114, which can propagate through the environment and reflect from nearby objects. RF reflections 116 from the objects propagate back to the sensor 112, which receive the reflections and pass them to the signal processing circuitry 130.

The signal processing circuitry 130 is constructed and arranged to down-convert and digitize the RF reflections and compare them with emitted RF signals. The signal processing circuitry 130 is further constructed and arranged to generate a radar point cloud, i.e., a three-dimensional map in which individual points represent radar detections. Each point in the radar point cloud is associated with various attributes, including its location in three-dimensional space ($x, y, z$), its doppler (velocity toward or away from the sensor), its RCS (intensity), and its time of arrival ($t$). In addition, the signal processing circuitry 130 is configured to render the radar point cloud in successive frames, where each frame represents a snapshot of the radar point cloud in time.

The signal-processing circuitry 130 may be implemented as a single assembly or as multiple assemblies, or it may be integrated in the same assembly as the computer 140. In some examples, the signal-processing circuitry 130 includes its own dedicated computer optimized for digital signal processing of radar signals. Various types of signal processing circuitry are known in the art.

As further shown in FIG. 1, the computer 140 includes a set of processors (e.g., one or more processor chips, assemblies, and/or coprocessors) and memory 144. The memory 144 includes both volatile memory, e.g., RAM (Random Access Memory), and non-volatile memory, such as one or more ROMs (Read-Only Memories), disk drives, solid state drives, and the like. The set of processors 142 and the memory 144 together form control circuitry, which is constructed and arranged to carry out various methods and functions as described herein. Also, the memory 144 includes a variety of software constructs realized in the form of executable instructions. When the executable instructions are run by the set of processors 142, the set of processors 142 carry out the operations of the software constructs. Although certain software constructs are specifically shown and described, it is understood that the memory 144 typically includes other software components, which are not shown, such as an operating system, various applications, processes, and daemons. Although the computer 140 may provide an arbitrarily high level of performance, it is typically expected to have limited computing and memory resources, as is common for consumer vehicles. Also, although only a single computer 140 is shown, this is merely an example, as various computing tasks may be distributed among multiple computers.

As further shown in FIG. 1, the memory 144 *"includes,"* i.e., realizes by execution of software instructions, a tracker 150, a segmenter 160, a queue manager 170, and a hierarchical temporal-spatial encoder 180. In various examples, the memory 144 may also include a classification head 190 and/or one or more tasks 190a for supporting advanced driver assistance (ADAS) and/or autonomous driving (AD). Non-limiting examples of such tasks include collision avoidance, adaptive cruise control, velocity estimation, sensor fusion, and self-driving features.

The tracker 150 is configured to identify objects in the radar point cloud, e.g., based on similarity of location and velocity, and to assign the objects respective identifiers. The tracker 150 is further configured to construct virtual bounding boxes 152 around identified objects and to follow the identified objects from one frame of the radar point cloud to the next.

The segmenter 160 is configured to separate the radar point cloud into separate segmented point clouds 162, such as one segmented point cloud for each object identified by the tracker 150. Trackers and segmenters are known in the art and need not be described further.

The queue manager 170 is configured to arrange successive frames of a segmented point cloud for a particular detected object in a time-ordered queue 172, such as a FIFO (first-in, first-out). The queue 172 may have a specified depth (number of frames).

The hierarchical temporal-spatial encoder 180 is configured to operate both spatially (within frames of the queue 172) and temporally (between frames of the queue 172) to provide more accurate and reliable feature extraction than could be achieved with spatial encoding alone. The hierarchical temporal-spatial encoder 180 may provide output in the form of point features 182, i.e., features of the particular object represented in the frames of the queue 172. Although such features may correspond to physically observable characteristics, there is no requirement that this be the case. For example, features may be provided by one or more neural networks and may reflect correlations, convolutions, or other combinations among various attributes of radar points.

The classification head 190, if provided, is configured to receive the point features 182 and to provide output in the

EP 4 632 426 A1

form of class labels 192. For example, the class labels 192 may identify the detected object as a pedestrian, a bicyclist, a motorcyclist, a car, or a truck. In an example, the classification head 190 is implemented using a neural network, such as a convolutional neural network.

The ADAS/AD tasks 190a, if provided, are configured to perform their respective activities based on the same point features 182. In some examples, the ADAS/AD tasks may receive input from the classification head 190, rather than directly from the hierarchical temporal-spatial encoder 180, or in addition to receiving input from the hierarchical temporal-spatial encoder 180. For example, the ADAS/AD tasks 190a may be configured to respond to features, to objects, or to both features and objects.

In example operation, the vehicle 110 is driven along roadways. As the vehicle moves, the radar sensor(s) 112 emit RF signals 114, which propagate outwardly from the vehicle and encounter objects 120 in the environment, such as a pedestrian. Reflections 116 from the objects travel back to the sensor(s) 112. The signal-processing circuitry 130 processes the reflections 116, compares them with emitted signals 114, and generates a radar point cloud, which may be rendered in consecutive frames. The tracker 150 identifies objects and their trajectories from the radar point cloud and constructs virtual bounding boxes 152 around the identified objects. The segmenter 160 then separates the point cloud into multiple segmented point clouds 162, e.g., one segmented point cloud for each identified object. Further operation described below relates to processing of a single segmented point cloud 162 for a single detected object, but one should appreciate that multiple segmented point clouds are typically processed for multiple objects simultaneously.

In accordance with one or more embodiments, the queue manager 170 arranges consecutive frames of a segmented point cloud 162 into a queue 172. The queue 172 includes multiple frames, such as 3, 5, or 10 frames, as non-limiting examples. The queue manager 170 may further assign relative timestamps, such as integers, to individual frames in the queue 172. Once a queue 172 is formed, the queue manager 170 provides the queue 172 as input to the hierarchical temporal-spatial encoder 180, which performs temporal-spatial feature extraction on the object represented by the frames in the queue. In an example, such feature extraction includes temporal-spatial sampling and grouping of radar points across different frames of the queue 172. Temporal-spatial sampling may proceed, for example, using a modified form of farthest point sampling (FPS), which measures distances between samples based not only on spatial offsets between points but also based on temporal offsets. For example, points in different frames may be considered farther apart than points within the same frame, even when the spatial offsets between the points are the same. Temporal-spatial grouping may proceed by grouping together points both within individual frames and among different frames. In some examples, spatial-only grouping may be performed, i.e., by grouping within individual frames but not among different frames. Thus, temporal-spatial grouping should be regarded as an option rather than a requirement. One should appreciate that temporal-spatial encoding leverages radar points across multiple frames, enabling the hierarchical temporal-spatial encoder 180 to build denser and more robust representations of features in the environment than could be achieved by limiting sampling and grouping to frames individually.

Output from the hierarchical temporal-spatial encoder 180 includes point features 182, which may identify aspects of an object but do not necessarily identify the object itself. The role of identifying objects may be performed instead by the classification head 190, based on the point features 182 identified by the hierarchical temporal-spatial encoder 180.

The vehicle 110 may use the class labels 192 in any suitable way. For example, a driver display within the vehicle may render class labels as respective icons placed relative to a depiction of the vehicle itself, thus providing the driver with a visual representation of the vehicle surroundings as indicated by the radar system. As another example, the vehicle 110 may detect, based on the class labels 192, an object in the roadway and, in response to this detection can trigger a suitable response, which may be independent of operator input.

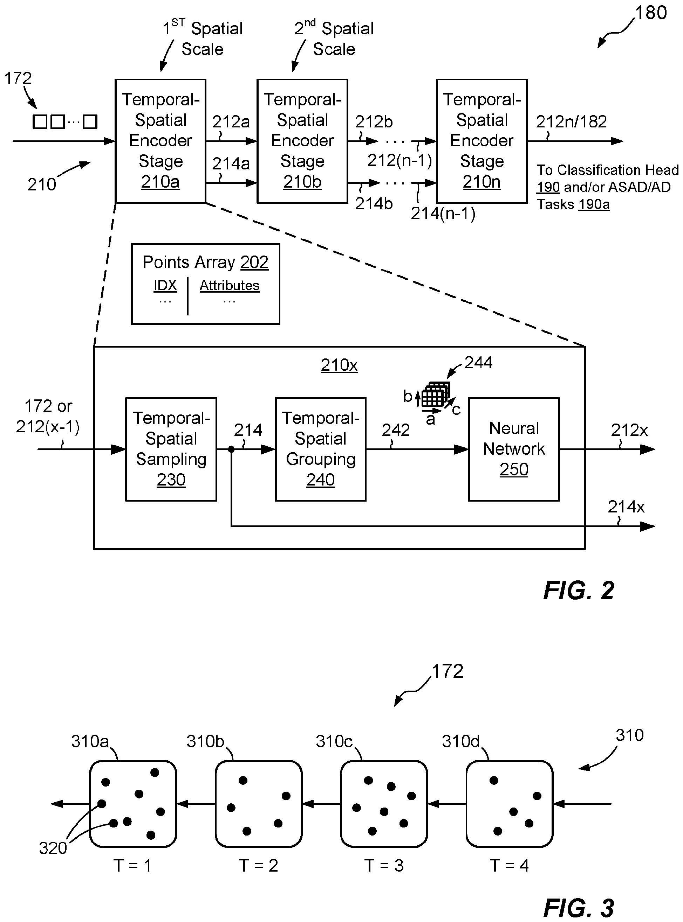

FIG. 2 shows an example hierarchical temporal-spatial encoder 180 in greater detail. Here, the hierarchical temporal-spatial encoder 180 includes multiple individual temporal-spatial encoder stages 210 (210a, 210b, ..., 210n) cascaded in series. A first temporal-spatial encoder stage 210a receives the queue 172 of frames as input and produces intermediate point features 212a and samples 214a as output. Similarly, a second temporal-spatial encoder stage 210b receives the intermediate point features 212a and samples 214a as input and produces further intermediate point features 212b and samples 214b as output. In a like manner, a last temporal-spatial encoder stage 210n receives intermediate point features 212(n-1) and samples 214(n-1) as input and produces point features 212n/182 as output. The samples 214x provided by each encoder stage 210 are those which the respective encoder stage obtains by performing temporal-spatial sampling. Each of the samples 214x is associated with coordinates *x, y, z,* and t, for example.

In general, the different encoders stages 210 may be optimized for different characteristics. For example, the first temporal-spatial encoder stage 210a may operate on a first spatial scale (receptive field) optimized for detecting smaller features, e.g., by applying a smaller grouping radius, whereas the second temporal-spatial encoder stage 210b may operate on a second spatial scale optimized for detecting larger features, e.g., by applying a larger grouping radius. Numbers of samples selected and the balance between spatial and temporal offsets may also be varied across different encoder stages 210.

To conserve memory and computing resources of the computer 140, the number of encoder stages 210 in the hierarchical temporal-spatial encoder 180 may be limited, with a typical number of encoder stages 210 being three or four. One should appreciate, though, that the number of encoder stages can be varied as computing resources permit.

A more detailed view of each temporal-spatial encoder stage 210 is shown at the bottom of FIG. 2. Here, an encoder stage 210x includes a temporal-spatial sampling component 230, a temporal-spatial grouping component 240, and a neural network 250. The neural network 250 may take a variety of forms, with non-limiting examples including a multi-level perception (MLP) module, bottleneck residual blocks, or attention-based transformer modules. The temporal-spatial sampling component 230 of the first encoder stage 210a operates on input from the queue 172 directly. The temporal-spatial sampling component 230 of each subsequent encoder stage 210b through 210n operates on sample points 214 produced by the immediately preceding encoder stage. Each of the sample points 214 is associated with *x, y, z,* and *t* coordinates, for example. The temporal-spatial grouping component 240 identifies a respective group 242 of points that surround each sample point.

For example, if the sampling component 230 identifies 16 sample points, the grouping component 240 would produce 16 groups of points, with the members of each group selected based on proximity (e.g., temporal-spatial proximity) to a respective sample point. At least one point included in each group is a sample point, but other points in each group need not be sample points.

The number of sample points selected and the number of points assigned to each group may vary from one encoder stage 210 to the next. For example, the first encoder stage 210a may select 16 sample points with a goal of assigning 8 points to each group. The second and third encoder stages 210 may each select 8 samples and again may attempt to assign 8 points per group. These numbers are merely examples and should not be construed as limiting.

In an example, each of the encoder stages 210b through 210n is limited in its selection of samples 214 and of points used for grouping to only those samples 214 acquired by the immediately preceding encoder, such that subsampling is performed by one or more stages. However, upsampling may be applied in some examples during sampling and grouping (or during sampling or grouping) when the number of available samples or points is small.

Although the sampling and grouping components 230 and 240 are shown as distinct components, their operation can overlap in time. For example, once a sample point has been identified by the sampling component 230, grouping may proceed around that sample point, with no need to wait until all samples have been selected before grouping can begin.

Once the encoder stage 210x has finished sampling and grouping, the encoder stage 210x may construct a tensor 244 that may be used as input to the neural network 250. In an example, the tensor 244 has a first dimension "a" for different sample points, such as 16 elements for 16 points. The tensor 244 may further have a second dimension *"b"* for different points per group, such as 8 elements reflecting 8 points per group, and a third dimension "c" for different attributes, such as 6 elements for the attributes x, y, z, t, doppler, and RCS. Typically, the number of attributes increases for successive encoder stages 210, as the neural network 250 of each encoder 210 may increase the dimensionality of attributes at its output. For example, the neural network 250 of the first encoder stage 210a may produce output with 16 dimensions rather than 6, with the 16 dimensions reflecting correlations, convolutions, and the like, and lacking any one-to-one relationships to the 6 input attributes.

In an example, the memory 144 of the computer 140 stores a points array 202 of the radar points located in the frames of the queue 172. The points array 202 provides a unique index (IDX) for radar point and associates point indices with respective attributes of those points. The array 202 thus enables different components of the encoder stage 210x, as well as different encoder stages 210, to identify radar points based merely on their indices. For example, sample points 214 and members of groups 242 may be identified by indices, rather than attributes. Also, the tensor 244 may be constructed by identifying sample points by their indices (e.g., 2, 9, 15, 19, etc.) and likewise by identifying members of each group by their indices. Specific attributes of points may be accessed from the array 202 only when needed for actual computations. Using the array 202 in this manner helps to conserve memory in the computer 140 by reducing the number of copies of attributes.

When constructing the tensor 244, it may not be possible always to find the desired number of points within each group. For example, grouping criteria may limit the number of points in a group to 5, rather than 8. The shortfall in points may be addressed, for example, by padding the group to include multiple instances of one or more of its already-selected members. Thus, if a group can be formed only with 5 points [2, 5, 6, 8, 10], the group may be padded to include the 8 points [2, 5, 6, 8, 10, 2, 5, 6]. The complete tensor 244 may then be applied to an input layer of the neural network 250.

FIG. 3 shows an example queue 172 of frames in additional detail. Here, the queue 172 includes four frames 310 arranged in a time-ordered FIFO. For example, frame 310a corresponds to time T=1, frame 310b corresponds to time T=2, frame 310c corresponds to time T=3, and frame 310d corresponds to time T=4. In the example shown, each frame 310 includes multiple radar points 320. As time passes, new frames 310 are pushed onto the queue (from the right) and old frames 310 are popped off of the queue (from the left). In some examples, a new hierarchical encoding takes place each time a new frame 310 is pushed onto the queue 172. Although the frames 310 are shown as 2-D squares for simplicity of illustration, the frames 310 typically correspond to 3-D cubes (bounding boxes).

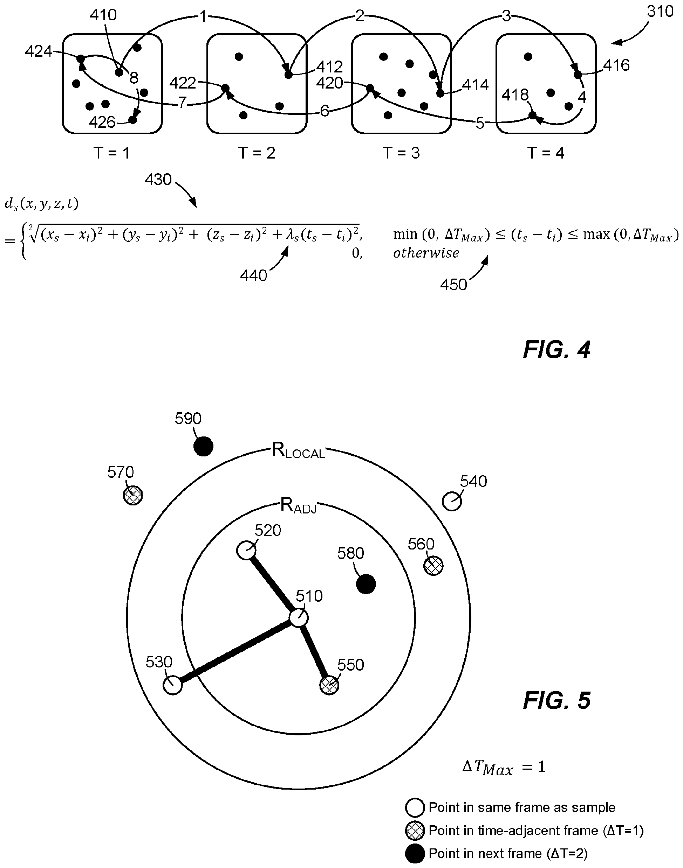

FIG. 4 shows an example arrangement for sampling radar points 320 in accordance with improvements hereof. The methodology presented in FIG. 4 may be carried out, for example, by the sampling component 230 of each temporal-spatial encoder stage 210 of FIG. 2.

Sampling may begin at any point 320 within any frame 310 of the queue 172. For example, a first sample 410 may be selected randomly, or based on a preset rule. Once the first sample 410 is selected, a modified farthest point sampling (FPS) is performed to identify a next sample. In an example, the sampling component 230 calculates temporal-spatial distances using equation 430, which is reproduced below:

$$d_s(x, y, z, t)$$
$$= \begin{cases} \sqrt[2]{(x_s - x_i)^2 + (y_s - y_i)^2 + (z_s - z_i)^2 + \lambda_s(t_s - t_i)^2}, & \min(0, \Delta T_{Max}) \leq (t_s - t_i) \leq \max(0, \Delta T_{Max}) \\ 0, & otherwise \end{cases}$$

Here, $d_s(x, y, z, t)$ is the Euclidian distance to a point "s" from the current sample, "i," which initially is the first sample 410. The calculated distance is the square root of the sum of the squares of offset components between points $s$ and $i$ in each of the dimensions $x, y, z$, and $t$. Time values may be expressed in units of relative timestamps, which may be integers. An adjustable parameter 440 ($\lambda_s$) sets a balance between spatial components ($x, y, z$) and the temporal component ($t$). For example, setting $\lambda_s$ to a large value ensures that the time component $\lambda_s(t_s - t_i)^2$ predominates over the spatial components, such that the next sample is certain to be selected from a different frame 310, assuming a timing constraint 450 is satisfied.

As shown to the right of equation 430, the timing constraint 450 limits points that are eligible for selection as the next sample. For example, a value $\Delta T_{Max}$ may be established that limits the temporal search range. If $\Delta T_{Max}$ is 1, for example, then only points 320 in the current frame or the immediately next time-adjacent frame are candidates for selection as the next sample. If $\Delta T_{Max}$ is 2, then only points 320 in the current frame or the two next time-adjacent frames are candidates for selection as the next sample. If $\Delta T_{Max}$ is -1, then only points 320 in the current frame or the immediately previous time-adjacent frame are candidates for selection as the next sample. However, if $\Delta T_{Max}$ is 0, then only points in the current frame may be selected. Points 320 outside the range specified by $\Delta T_{Max}$ are out of scope and may be assigned distances of 0, ensuring that they are never selected as next candidates. Preferably, such points are simply ignored, however, with no distances calculated for them, thus reducing the computational workload of the computer 140.

In some examples, the maximum time displacement $\Delta T_{Max}$ has not only a magnitude but also a sign, which limits the direction in time for which candidates for the next sample may be selected. For example, a positive value of $\Delta T_{Max}$ may limit searching to the current frame 310 and to $\Delta T_{Max}$ frames occurring later in time, while a negative value of $\Delta T_{Max}$ may limit searching to the current frame 310 and to $|\Delta T_{Max}|$ frames occurring earlier in time.

In some examples, a set of sampling rules may establish different values of $\Delta T_{Max}$ to ensure that sampling is performed effectively across different frames 310. For example, $\Delta T_{Max}$ may initially be set to a positive number (e.g., +1, +2, etc.) to ensure that searching for the next sample always looks to the current frame and to one or more time-adjacent frames occurring later in time. When a sample is selected from a first end frame (e.g., the T=4 frame at the end of the queue 172), $\Delta T_{Max}$ may be set to 0, ensuring that the next sample can be selected only from the same frame. For the immediately following sample, the direction (sign) of $\Delta T_{Max}$ reverses, and the search proceeds backwards in time. Backward searching continues in this manner until a sample is selected from a second end frame (e.g., the T=1 frame at the beginning of the queue 172), whereupon $\Delta T_{Max}$ is again set to 0, ensuring that the next sample is selected from the current frame only. Then the direction switches again, so that $\Delta T_{Max}$ is positive and searching resumes in the positive direction. These sampling rules help to ensure that samples of an object can be selected from different frames. Also, limiting the sampling to the current frame in end frames for a single sample ensures that features captured by previous samples are not simply retraced when reversing direction, such that different geometrical parts of an object can be captured.

The above sampling rules are evident in the illustrated example, where a second sample 412 is selected as the most distant point from the first sample 410 within the timing constraints 450 ($\Delta T_{Max} = +1$). For example, distances are calculated from sample 410 to each of the other points 320 in frames T=1 and T=2, using equation 430. No calculations need be performed for points in the other frames. The point yielding the longest distance is selected as the next sample (sample 412). Using the same approach, samples 414 and 416 are selected (numbered arrows 1-8 indicate different sample jumps). As the T=4 frame is an end frame, the next sample 418 is limited to the same T=4 frame, and then sampling resumes in the reverse direction, proceeding to samples 420, 422, and 424. As sample 424 is located in an end frame (the T=1 frame), the next sample 426 is local, within the same T=1 frame. A next sample (if there is one) may be found by searching forward in time, and the process repeats until a desired number of samples is obtained. Of note, once a point is selected as a sample, that point is removed from consideration from FPS operation going forward, such that each point 320 can be sampled only once.

In some examples, $\Delta T_{Max}$ is an adaptively adjustable parameter. For example, $\Delta T_{Max}$ may be varied based on the speed (or equivalently, frame-to-frame displacement) of the object being sampled. If the speed or displacement falls below a threshold, indicating that the object is relatively stationary with respect to the vehicle 110, then $\Delta T_{Max}$ may be increased, such that searching for a next sample point can be performed across a larger number of frames. Likewise, if the speed or displacement exceeds the threshold, indicating that the object is moving more quickly relative to the vehicle 110, then $\Delta T_{Max}$ may be decreased, such that searching of a next sample point is performed across a fewer number of frames.

FIG. 5 shows an example arrangement for grouping radar points 320 in accordance with improvements hereof. The methodology presented in FIG. 5 may be carried out, for example, by the grouping component 240 of each temporal-spatial encoder stage 210 shown in FIG. 2.

The figure depicts grouping around a current sample point 510. Here, radar points are represented in space (*x, y, z*) and points from different frames are shown with different shading. Open circles represent points in the same frame as sample 510, hatched circles represent points in the immediately next frame ($\Delta T$ = +1), and solid circles represent points in the second frame over ($\Delta T$ = +2).

Just as the sampling of FIG. 4 is subject to timing constraints 450, so too is the grouping of FIG. 5. In an example, timing constraints applied when grouping around a current sample point are the same as those applied when sampling from the same sample point using FPS. For example, the current sample point 510 may be associated with a $\Delta T_{Max}$= +1, because +1 was the $\Delta T_{Max}$ applied when sampling from the sample point 510. Thus, grouping around sample 510 for this example is limited to the same frame that contains sample 510 and to the immediately next frame in time. Any points not found in these two frames may be ignored, i.e., they are not candidates for grouping and no calculations are performed for determining their distance from sample 510. In the illustrated example, any points shown with solid circles ($\Delta T$ = +2) are ignored for purposes of grouping.

In an example, grouping proceeds by applying different spatial radii for different frames. For example, a first radius $R_{LOCAL}$ is applied to points in the same frame as sample 510 and a second radius $R_{ADJ}$ is applied to points in the immediately time-adjacent frame ($\Delta T$ = +1). The grouping then groups together all points in the same frame as the sample 510 within the radius $R_{LOCAL}$, along with all points in the next frame within the radius $R_{ADJ}$. Thus, points 520 and 530 are included in the group because they belong to the same frame as sample 510 and fall within radius $R_{LOCAL}$. Point 540 is excluded, however, as it falls outside $R_{LOCAL}$. Point 550 is also included in the group because it belongs to the next frame and falls within radius $R_{ADJ}$, but points 560 and 570 are excluded, as they belong to the next frame and fall outside $R_{ADJ}$. Note that thick lines connect members of the group.

One should appreciate that if $\Delta T_{Max}$ had been +2 instead of +1 for sample 510, then a third radius, e.g., $R_{ADJ2}$ (not shown), could be applied, which would be smaller than $R_{ADJ}$. In general, the farther away a point is in time, the smaller the radius that is used for determining whether to include that point in the group. Thus, for $\Delta T_{Max}$ = 2, point 580 might be included in the group, but only if its distance was within $R_{ADJ2}$. Conversely, if $\Delta T_{Max}$ had been 0 for sample 510 instead of +1, then $R_{LOCAL}$ would be the only relevant radius and only local points (within the same frame) would be considered for grouping. Points from all other frames would be ignored. Mathematically, the grouping radius $R_{\Delta T}$ for different values of $\Delta T$ may be expressed as follows:

$$R_{\Delta T} = \begin{cases} \lambda_g{}^{|\Delta T|} \cdot R_{LOCAL}, & |(t_s - t_i)| \leq |\Delta T_{Max}| \\ 0, & otherwise \end{cases},$$

Where "$R_{LOCAL}$" is the grouping radius for $\Delta T$ = 0 (same frame) and $\lambda_g$ is a scale factor. Both $R_{LOCAL}$ and $\lambda_g$ may be adjustable parameters. For example, different values of $R_{LOCAL}$ and/or $\lambda_g$ may be used by different encoder stages 210. Setting $\lambda_g$ between 0 and 1 ensures that the grouping radius $R_{\Delta T}$ becomes smaller for larger values of $\Delta T$.

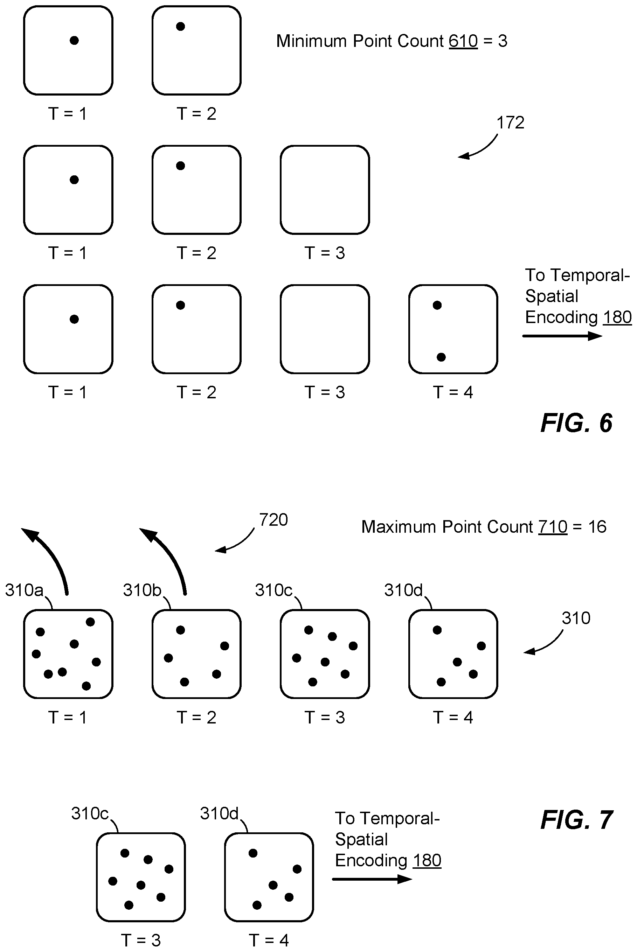

FIGS. 6 and 7 show example arrangements for arranging frames of the queue 172 based on point counts. The methodology described in these figures may be performed, for example, by the queue manager 170 (FIG. 1).

In FIG. 6, the queue manager 170 imposes a minimum point count requirement 610 on the total number of points that must be found in the queue 172 before the queue 172 can be passed to the hierarchical temporal-spatial encoder 180 for processing. In the illustrated example, the minimum point count 610 is 3.

Starting at the top of FIG. 6, we see that two frames (T=1 and T=2) are insufficient, as each frame contains only a single point, with the total number of points being less than 3. Adding another frame (T=3) to the queue 172 does not help, as the T=3 frame contains no points, possibly indicating a condition in which the tracker 150 is off or where no points are detected. However, adding an additional frame for T=4 (bottom of FIG. 6) causes the total number of points (4) to exceed the minimum point count 610 (3). Once this minimum point count 610 is reached or exceeded, the queue 172 may be forwarded to the hierarchical temporal-spatial encoder 180 for processing. Imposing the minimum point count 610 ensures that enough points are present in the queue 172 to perform reliable feature extraction. Although some radar objects, such as cars and trucks, may produce high point counts, which can number in the hundreds, pedestrians and other small objects may produce very sparse point counts, particularly when they are far away from the vehicle 110.

FIG. 7 shows an arrangement in which frames accumulated in the queue 172 may include more points than are needed. Here, a maximum point count limit 710 may be imposed to limit the number of frames that are forwarded to the hierarchical temporal-spatial encoder 180 for processing. Limiting the frames in this manner reduces computational resources and memory required of the hierarchical temporal-spatial encoder 180, thus promoting efficient operation. Also, higher point counts allow detected objects to be encoded and classified accurately with fewer frames than are needed with detected objects having lower point counts.

In the example, a maximum point count limit 710 is set to 16. The queue 172 initially contains four frames (310a, 310b, 310c, and 310d), and the total number of points in these frames is 25, a number that exceeds the maximum point count limit of 16. To reduce the point count in frames sent to the hierarchical temporal-spatial encoder 180, the queue manager 170 may pop (720) frames from the queue 172, beginning with the oldest frame 310a. Herein, "popping" a frame refers to removing that frame from a queue. Popping frame 310a reduces the total point count in the queue 172 to 17. As 17 still exceeds the maximum point count limit 710 of 16, the queue manager 170 pops the next oldest frame 310b. As the resulting point count of 12 falls below the maximum point count limit 710, the remaining frames 310c and 310d may be forwarded to the hierarchical temporal-spatial encoder 180 for processing. It should be noted that a single frame may be forwarded to the hierarchical temporal-spatial encoder 180 even if the number of points in that frame exceeds the maximum point count limit 710. At least one frame must generally be forwarded.

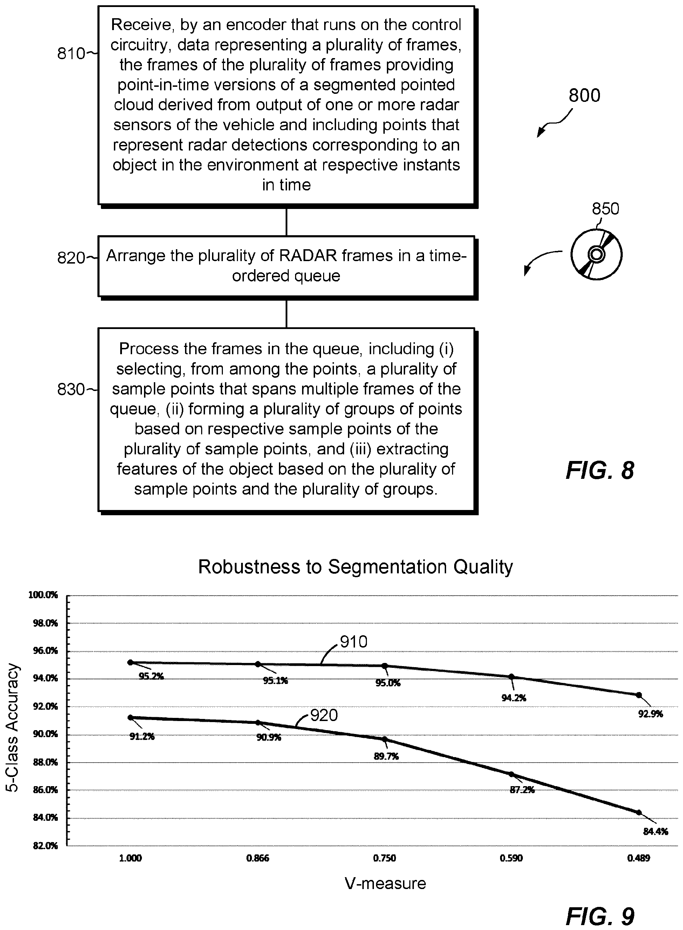

FIG. 8 shows an example method 800 that may be carried out in connection with a radar system, such as that of the vehicle 110 in the environment 100 of FIG. 1, and provides an overview of some of the features described above. The method 800 may be performed, for example, by the software constructs described in connection with FIGS. 1 and 2, which reside in the memory 144 of the computer 140 and are run by the set of processors 142. The various acts of method 800 may be ordered in any suitable way. Accordingly, embodiments may be constructed in which acts are performed in orders different from that illustrated, which may include performing some acts simultaneously.

At 810 ("Receive, by an encoder that runs on the control circuitry, data representing a plurality of frames, the frames of the plurality of frames providing point-in-time versions of a segmented pointed cloud derived from output of one or more radar sensors of the vehicle and including points that represent radar detections corresponding to an object in the environment at respective instants in time"), a plurality of radar frames 310 is received. The radar frames 310 are derived from output of one or more radar sensors 112 of a vehicle 110. The radar frames 310 include points 320 that represent radar detections corresponding to an object 120 in the environment at respective instants in time (T=1, T=2, and so on).

At 820 ("Arrange the plurality of RADAR frames in a time-ordered queue"), the plurality of radar frames 310 is arranged in a time-ordered queue 172. For example, the queue manager 170 may arrange the queue 172 as a FIFO that receives new frames 310 at one end and pops old frames 310 from the other end. In forming the queue 172, the queue manager 170 may enforce a minimum point count requirement 610 and/or a maximum point count limit 710, adjusting the number of frames in the queue 172 as needed.

At 830 ("Process the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups"), the radar frames 310 in the queue 172 are processed. Such processing includes (i) selecting, from among the points 320, a plurality of sample points 214 that spans multiple frames 310 of the queue 172, (ii) forming a plurality of groups 242 of points based on respective sample points, and (iii) extracting intermediate point features 212x of the object 120 based on the plurality of sample points 214 and the plurality of groups 242.

In some examples, the method 800 may be embodied as a computer program product including one or more non-transient, computer-readable storage media 850, such as a magnetic disk, magnetic tape, compact disk, DVD, optical disk, flash drive, solid state drive, SD (Secure Digital) chip or device, Application Specific Integrated Circuit (ASIC), Field Programmable Gate Array (FPGA), and/or the like. Any number of computer-readable media may be used. The media may be encoded with instructions which, when executed on one or more computers or other processors, perform the process or processes described herein. Such media may be considered articles of manufacture or machines, and may be transportable from one machine to another.

The technique as described herein improves the accuracy and reliability of feature extraction, which results in improvements in object classification as well as in various ADAS/AD applications. In real life applications, segmentation errors of tracked objects are inevitable due to many factors, such as trajectory prediction errors, crowded scenes, and the like. For this reason, being robust to different segmentation errors is a key performance indicator of encoding and classification schemes. From the point cloud perspective, segmentation errors fall into two main categories:

    1. Real object points missing; and

    2. Noise points, which are not part of the object, are improperly included.

To assess the segmentation quality of the point cloud, the V-measure metric is commonly used, which includes the following two scores (sub-metrics):

    1. Homogeneity score, which indicates the portion of real object points included:

$$h = 1 - \frac{H(Y_{true}|Y_{pred})}{H(Y_{true})}$$

2. Completeness score, which indicates the portion of real object points to the total points (including noise):

$$c = 1 - \frac{H(Y_{pred}|Y_{true})}{H(Y_{pred})}$$

To reflect the overall quality, V-measure is calculated as the harmonic mean between homogeneity and completeness scores, as follows:

$$V = \frac{2}{\frac{1}{h} + \frac{1}{c}} = \frac{2 \cdot h \cdot c}{h + c}$$

FIG. 9 shows an example comparison of 5-class accuracy across a range of V-measure values. Here, it can be seen that the accuracy 910 for temporal-spatial processing as presented herein exceeds an accuracy 920 for spatial-only processing across all values of V-measure in the illustrated range.

An improved technique has been presented for identifying object features based on radar signals. The technique includes receiving frames 310 depicting an object 120 at consecutive points in time and arranging the frames 310 in a time-ordered queue 172. radar points 320 are sampled across multiple frames 310 of the queue 172, and points 320 surrounding the sampled points are grouped together. Object features are then extracted based on the sampled points and groups. In some examples, such features are further processed to determine the particular type of object. Additionally, or alternatively, such features may be provided as input to other vehicle tasks, such as those used for advanced driver assistance and/or autonomous driving. Advantageously, leveraging radar points across multiple frames enables the construction of less sparse representations of objects, which promotes more accurate and reliable feature extraction and/or object identification.

Certain embodiments are directed to a device that includes a set of processors coupled to control circuitry. The control circuitry is constructed and arranged to perform a method of identifying object features in an environment of a vehicle. The method includes receiving, by an encoder that runs on the control circuitry, data representing a plurality of frames. The frames of the plurality of frames provide point-in-time versions of a segmented pointed cloud derived from output of one or more radar sensors of the vehicle and include points that represent radar detections corresponding to an object in the environment at respective instants in time. The method further includes arranging the plurality of frames in a time-ordered queue and processing the frames in the queue. The processing includes (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

In some examples, the method further includes providing the extracted features of the object to a classification head constructed and arranged to classify the object as one of a plurality of object types, the object types including one or more of (i) pedestrians, (ii) bicyclists, or (iii) motorcyclists.

In some examples, selecting the plurality of sample points includes performing a farthest point sampling (FPS), the FPS including searching for a next sample point of the plurality of sample points based on distances of other points of the plurality of frames from a current sample point of the plurality of sample points, wherein the distances are based on both spatial offsets and temporal offsets.

In some examples, the method further includes determining the distances of the other points from the current sample point of the plurality of sample points based on the spatial offsets and the temporal offsets, wherein determining the distances includes weighting contributions of the spatial offsets and temporal offsets using at least one tunable parameter.

In some examples, performing the FPS includes limiting a temporal search range within which the next sample point is selected, such that points from at least one frame in the queue are excluded as candidates for the next sample point.

In some examples, the method further includes detecting a speed of motion of the object relative to the vehicle and increasing the temporal search range responsive to the speed falling below a threshold speed.

In some examples, limiting the temporal search range further includes: (i) searching in a first direction only until a sample point is selected from a first end frame of the queue; (ii) then searching only in the first end frame for a single sample point; (iii) then searching in a second direction opposite the first direction until a sample point is selected from a second end frame of the queue opposite the first end frame; and (iv) then searching only in the second end frame for a single sample point.

In some examples, selecting the plurality of sample points includes selecting fewer than all of the points in the frames of the queue.

In some examples, forming the plurality of groups includes providing a respective group for each of the plurality of sample points, and wherein at least one group includes points from multiple frames.

In some examples, the method further includes limiting frames from which points may be selected for a group to fewer than all frames in the queue.

In some examples, forming the plurality of groups further includes: limiting candidate points within a current frame that may be selected for inclusion in a particular group to points within a first spatial radius of a current sample point; and limiting candidate points within a time-adjacent frame that may be selected for inclusion in the particular group to points within a second spatial radius of the current sample point, wherein the first spatial radius is larger than the second spatial radius.

In some examples, selecting the plurality of sample points is performed by a sampling component, wherein forming the plurality of groups is performed by a grouping component, and wherein the method further includes storing the points and associated attributes in an array in computer memory, the array having different indices for respective points, and identifying, by the sampling component, the plurality of sample points to the grouping component by providing array indices of the plurality of sample points but not by providing the associated attributes.

In some examples, extracting features of the object includes constructing a tensor having a first dimension for different sample points of the plurality of sample points, a second dimension for points per group of the plurality of groups, and a third dimension for attributes of points within the groups, providing the tensor as input to a neural network trained to identify object features from sample points, groups, and attributes.

In some examples, the method further includes adding frames to the queue until a total number of points in the frames of the queue meets a minimum limit.

In some examples, the method further includes removing at least one oldest frame from the queue responsive to a total number of points in the frames of the queue exceeding a maximum limit.

In some examples, the encoder is a hierarchical encoder that includes multiple encoder stages, the stages including a first encoder stage constructed and arranged to extract features of the object on a first spatial scale, and a second encoder stage cascaded with the first encoder stage, the second encoder stage constructed and arranged to extract features of the object on a second spatial scale different from the first spatial scale and to receive features of the object extracted by the first encoder stage as inputs.

Additional embodiments are directed to a computer-implemented method of identifying object features in an environment of a vehicle, which includes performing any of the acts ascribed to the above-described device, according to any of the examples provided. Still further embodiments are directed to a computer program product. The computer program product stores instructions which, when executed on control circuitry of a computerized apparatus, cause the computerized apparatus to perform any of the acts ascribed to the above-described device, according to any of the examples provided. One should appreciate that the above-described acts and features can be combined in any manner that makes technological sense, and that all such combinations are considered to be expressly disclosed herein.

Having described certain embodiments, numerous alternative embodiments or variations can be made. For example, although embodiments have been described in connection with radar systems used by vehicles on roadways, the same approach may be applied in radar systems used by aquatic surface vehicles and airplanes.

Further, although features have been shown and described with reference to particular embodiments hereof, such features may be included and hereby are included in any of the disclosed embodiments and their variants. Thus, it is understood that features disclosed in connection with any embodiment are included in any other embodiment.

As used throughout this document, the words *"comprising," "including," "containing,"* and *"having"* are intended to set forth certain items, steps, elements, or aspects of something in an open-ended fashion. Also, as used herein and unless a specific statement is made to the contrary, the word *"set"* means one or more of something. This is the case regardless of whether the phrase *"set of"* is followed by a singular or plural object and regardless of whether it is conjugated with a singular or plural verb. Also, a *"set of"* elements can describe fewer than all elements present. Thus, there may be additional elements of the same kind that are not part of the set. Further, ordinal expressions, such as *"first," "second,"* *"third,"* and so on, may be used as adjectives herein for identification purposes. Unless specifically indicated, these ordinal expressions are not intended to imply any ordering or sequence. Thus, for example, a *"second"* event may take place before or after a *"first* event," or even if no first event ever occurs. In addition, an identification herein of a particular element, feature, or act as being a *"first"* such element, feature, or act should not be construed as requiring that there must also be a *"second"* or other such element, feature or act. Rather, the *"first"* item may be the only one. Also, and unless specifically stated to the contrary, *"based on"* is intended to be nonexclusive. Thus, *"based on"* should be interpreted as meaning *"based at least in part on"* unless specifically indicated otherwise. Further, although the term *"user"* as used herein may refer to a human being, the term is also intended to cover non-human entities, such as robots, bots, and other computer-implemented programs and technologies. Although certain embodiments are disclosed herein, it is understood that these are provided by way of example only and should not be construed as limiting.

Those skilled in the art will therefore understand that various changes in form and detail may be made to the embodiments disclosed herein without departing from the scope of the following claims.

**Claims**

1. A device comprising control circuitry that includes a set of processors coupled to memory, the control circuitry constructed and arranged to perform a method of identifying object features in an environment of a vehicle, the method including:

   receiving, by an encoder that runs on the control circuitry, data representing a plurality of frames, the frames of the plurality of frames providing point-in-time versions of a segmented pointed cloud derived from output of one or more radar sensors of the vehicle and including points that represent radar detections corresponding to an object in the environment at respective instants in time;
   arranging the plurality of frames in a time-ordered queue; and
   processing the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

2. The device of claim 1, wherein the method further includes providing the extracted features of the object to a classification head constructed and arranged to classify the object as one of a plurality of object types, the object types including one or more of (i) pedestrians, (ii) bicyclists, or (iii) motorcyclists.

3. The device of claim 1 or 2, wherein selecting the plurality of sample points includes performing a farthest point sampling (FPS), the FPS including searching for a next sample point of the plurality of sample points based on distances of other points of the plurality of frames from a current sample point of the plurality of sample points, wherein the distances are based on both spatial offsets and temporal offsets.

4. The device of claim 3, wherein the method further includes determining the distances of the other points from the current sample point of the plurality of sample points based on the spatial offsets and the temporal offsets, wherein determining the distances includes weighting contributions of the spatial offsets and temporal offsets using at least one tunable parameter.

5. The device of claim 3 or 4, wherein performing the FPS includes limiting a temporal search range within which the next sample point is selected, such that points from at least one frame in the queue are excluded as candidates for the next sample point.

6. The device of claim 5, wherein the method further includes detecting a speed of motion of the object relative to the vehicle and increasing the temporal search range responsive to the speed falling below a threshold speed.

7. The device of claim 5 or 6, wherein limiting the temporal search range further includes:

   (i) searching in a first direction only until a sample point is selected from a first end frame of the queue;
   (ii) then searching only in the first end frame for a single sample point;
   (iii) then searching in a second direction opposite the first direction until a sample point is selected from a second end frame of the queue opposite the first end frame; and
   (iv) then searching only in the second end frame for a single sample point.

8. The device of any preceding claim, wherein forming the plurality of groups includes providing a respective group for each of the plurality of sample points, and wherein at least one group includes points from multiple frames.

9. The device of claim 8, further comprising limiting frames from which points may be selected for a group to fewer than all frames in the queue.

10. The device of claim 9, wherein forming the plurality of groups further includes:

limiting candidate points within a current frame that may be selected for inclusion in a particular group to points within a first spatial radius of a current sample point; and

limiting candidate points within a time-adjacent frame that may be selected for inclusion in the particular group to points within a second spatial radius of the current sample point,

wherein the first spatial radius is larger than the second spatial radius.

11. The device of any preceding claim, wherein selecting the plurality of sample points is performed by a sampling component, wherein forming the plurality of groups is performed by a grouping component, and wherein the method further includes:

storing the points and associated attributes in an array in computer memory, the array having different indices for respective points, and

identifying, by the sampling component, the plurality of sample points to the grouping component by providing array indices of the plurality of sample points but not by providing the associated attributes.

12. The device of any preceding claim, wherein extracting features of the object includes:

constructing a tensor having a first dimension for different sample points of the plurality of sample points, a second dimension for points per group of the plurality of groups, and a third dimension for attributes of points within the groups; and

providing the tensor as input to a neural network trained to identify object features from sample points, groups, and attributes.

13. The device of claim 1, wherein the encoder is a hierarchical encoder that includes multiple encoder stages, the stages including:

a first encoder stage constructed and arranged to extract features of the object on a first spatial scale; and

a second encoder stage cascaded with the first encoder stage, the second encoder stage constructed and arranged to extract features of the object on a second spatial scale different from the first spatial scale and to receive features of the object extracted by the first encoder stage as inputs.

14. A computer-implemented method of identifying object features in an environment of a vehicle, comprising:

receiving data representing a plurality of frames derived from output of one or more radar sensors of the vehicle, the frames of the plurality of frames providing point-in-time versions of a segmented pointed cloud derived from output of one or more radar sensors of the vehicle and including points that represent radar detections corresponding to an object in the environment at respective instants in time;

arranging the plurality of frames in a time-ordered queue; and

processing the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

15. A computer program product including a set of non-transitory, computer-readable media having instructions which, when executed by control circuitry of a computerized apparatus, cause the computerized apparatus to perform a method of identifying object features in an environment of a vehicle according to claim 14.

100

110

SP 130 — Computer 140

116

120

112

114

140

Processor(s) 142

Memory 144

From
Signal
Processing
130

Tracker
150

152

Segmenter
160

162

Queue Mgr
170

172

□ □ ··· □

Hierarchical
Temporal-Spatial
Encoder 180

182

Classification
Head
190

192

ADAS/AD
Task(s)
190a

*FIG. 1*

**FIG. 2**

**FIG. 3**

$$d_s(x, y, z, t)$$

$$= \begin{cases} \sqrt[2]{(x_s - x_i)^2 + (y_s - y_i)^2 + (z_s - z_i)^2 + \lambda_s(t_s - t_i)^2}, & \min(0, \Delta T_{Max}) \leq (t_s - t_i) \leq \max(0, \Delta T_{Max}) \\ 0, & otherwise \end{cases}$$

*FIG. 4*

*FIG. 5*

$$\Delta T_{Max} = 1$$

○ Point in same frame as sample

⊗ Point in time-adjacent frame (ΔT=1)

● Point in next frame (ΔT=2)

Minimum Point Count 610 = 3

T = 1    T = 2

172

T = 1    T = 2    T = 3

To Temporal-
Spatial
Encoding 180

T = 1    T = 2    T = 3    T = 4

**FIG. 6**

720

Maximum Point Count 710 = 16

310a    310b    310c    310d    310

T = 1    T = 2    T = 3    T = 4

310c    310d    To Temporal-
Spatial
Encoding 180

**FIG. 7**

T = 3    T = 4

810~ Receive, by an encoder that runs on the control circuitry, data representing a plurality of frames, the frames of the plurality of frames providing point-in-time versions of a segmented pointed cloud derived from output of one or more radar sensors of the vehicle and including points that represent radar detections corresponding to an object in the environment at respective instants in time

800

820~ Arrange the plurality of RADAR frames in a time-ordered queue

850

830~ Process the frames in the queue, including (i) selecting, from among the points, a plurality of sample points that spans multiple frames of the queue, (ii) forming a plurality of groups of points based on respective sample points of the plurality of sample points, and (iii) extracting features of the object based on the plurality of sample points and the plurality of groups.

*FIG. 8*

## Robustness to Segmentation Quality

910

95.2%    95.1%    95.0%    94.2%    92.9%

920

91.2%    90.9%    89.7%    87.2%    84.4%

5-Class Accuracy

V-measure

*FIG. 9*

Europäisches
Patentamt

European
Patent Office

Office européen
des brevets

**EUROPEAN SEARCH REPORT**

Application Number

EP 25 16 0716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Li Charles R ET AL: "PointNet++: Deep Hierarchical Feature Learning on Point Sets in a Metric Space", , 1 January 2017 (2017-01-01), XP093217653, Retrieved from the Internet: URL:https://proceedings.neurips.cc/paper_files/paper/2017/file/d8bf84be3800d12f74d8b05e9b89836f-Paper.pdf * abstract * * paragraphs [0001] - [0003]; figure 2 * ----- | 1-15 | INV. G01S7/41 G01S13/66 G01S13/72 G01S13/931 G06V10/764 G06V10/82 G06V20/58 |
| A | EP 4 246 183 A1 (BOSCH GMBH ROBERT [DE]) 20 September 2023 (2023-09-20) * abstract * * paragraphs [0001], [0016], [0025] - [0034]; claim 1; figures 1-3 * ----- | 1-15 | |
| A | EP 3 985 411 A1 (APTIV TECH LTD [BB]) 20 April 2022 (2022-04-20) * abstract * * paragraphs [0001], [0006], [0037] - [0054]; figures 1-3 * * paragraphs [0068] - [0071]; figure 7 * ----- | 1-15 | TECHNICAL FIELDS SEARCHED (IPC) G01S G06V |
| A | US 2022/011122 A1 (HE HAO [CN] ET AL) 13 January 2022 (2022-01-13) * abstract * * paragraphs [0001], [0004], [0009] - [0012] * * paragraphs [0070] - [0082]; figures 1,4,5 * ----- -/-- | 1-15 | |

The present search report has been drawn up for all claims

| Place of search | Date of completion of the search | Examiner |
|---|---|---|
| Munich | 15 July 2025 | van Norel, Jan |

EPO FORM 1503 03.82 (P04C01)

Europäisches
Patentamt

European
Patent Office

Office européen
des brevets

**EUROPEAN SEARCH REPORT**

Application Number

EP 25 16 0716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | CHEN LIHUI ET AL: "Track-Cued Radar Point Cloud Target Classification", 2024 58TH ASILOMAR CONFERENCE ON SIGNALS, SYSTEMS, AND COMPUTERS, IEEE, 27 October 2024 (2024-10-27), pages 1354-1359, XP034883919, DOI: 10.1109/IEEECONF60004.2024.10942901 [retrieved on 2025-04-04] * the whole document * | 1-15 | |

-----

**TECHNICAL FIELDS SEARCHED        (IPC)**

The present search report has been drawn up for all claims

| Place of search | Date of completion of the search | Examiner |
|---|---|---|
| Munich | 15 July 2025 | van Norel, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 0716

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2025

| Patent document cited in search report | Publication date | Patent family member(s) | Publication date |
|---|---|---|---|
| EP 4246183 A1 | 20-09-2023 | NONE | |
| EP 3985411 A1 | 20-04-2022 | CN 114387203 A | 22-04-2022 |
| | | EP 3985411 A1 | 20-04-2022 |
| | | US 2022120858 A1 | 21-04-2022 |
| US 2022011122 A1 | 13-01-2022 | AU 2021240237 A1 | 27-01-2022 |
| | | CN 114092751 A | 25-02-2022 |
| | | EP 3937079 A1 | 12-01-2022 |
| | | JP 2022016419 A | 21-01-2022 |
| | | US 2022011122 A1 | 13-01-2022 |

EPO FORM P0459

For more details about this annex : see Official Journal of the European Patent Office, No. 12/82